# EUROPEAN PATENT APPLICATION

(11) **EP 3 480 582 A1**
(43) Date of publication of application: **08.05.2019**
(21) Application number: 17199573.1
(22) Date of filing: 01.11.2017
(51) Int. Cl.: G01N 21/64, B07C 5/342, G01N 21/85, G01N 21/84

(54) **INSPECTION APPARATUS AND METHOD**

(71) Applicant: Bühler UK Limited, London E16 2BF (GB)
(72) Inventor: KELF, Timothy, London, E16 2BF (GB); DEEFHOLTS, Benedict, London, E16 2BF (GB); DEPREZ, Jean-Francois, London, E16 2BF (GB)
(74) Representative: Boden, Keith McMurray

(57) **Abstract**

An inspection apparatus for inspecting a flow of product (P) using fluorescence, the apparatus comprising: a light source (3) which provides an elongate band of illumination (I) to the flow of product (P); a camera (7), which has a viewing axis (X) which intersects the flow of product (P), for receiving fluorescence emission (FE) along the viewing axis (X) from objects within the flow of product (P); and a dichroic optic (9) which receives the illumination (I) from the light source (3) and one of reflects or transmits illumination to the flow of product (P) along the viewing axis (X) of the camera (7) and receives the fluorescence emission (FE) from objects within the flow of product (P) and the other of reflects or transmits the fluorescence emission (FE), while excluding the illumination (I) to the camera (7) along the viewing axis (X) of the camera (7).

## Description

The present invention relates to an inspection apparatus for and a method of characterizing product using fluorescence, in particular characterizing product having mycotoxin contamination, such as aflatoxin contamination, for example, in commodities, including maize grains, peanuts, coffee beans, tree nuts and other kernels.

Various inspection apparatus and methods have been disclosed, but currently it is not possible to sort aflatoxin-infected product efficiently.

Hesseltine et al (1973), "New methods for rapid detection of aflatoxin", Pure Appl. Chem., 35, 259-266, 10.1351/pac197335030259 discloses the application of UV in detecting aflatoxin and the importance of detecting the correct color of fluorescence.

GB-A-993063 discloses the use of UV fluorescence to detect aflatoxin, and highlights the problem associated with weak emission signals from the UV excitation. The disclosed apparatus uses blocking filters and lamps to provide the excitation signal, and, in order to overcome the problem of sensitivity, it is necessary to employ photomultiplier tubes.

CN-A-103234945 teaches the use of an RGB line camera combined with UV lighting on both sides of a chute. Again, in order to achieve sufficient signal to noise, a time-delay integration (TDI) sensor is required, which integrates the charge over several lines in order to improve the signal-to-noise. This also means that an even illumination needs to cover the full extent of the area sensed by the TDI device, and so the power cannot be concentrated to a narrow band, and hence a higher lighting power is required. Furthermore, if the product rolls or jumps whilst running through the area being integrated, there is a risk that the different lines will not be integrated over the same point on the product. The disclosed method is also limited by the need for the product to have a very consistent speed and trajectory, which is not normally achieved on a chute-fed sorting system.

CN-U-204989020 discloses an alternative optical arrangement which uses a similar system to that used by laser sorting machines. Rather than using a line-scanning device, a rotating mirror is used together with a laser or collimated light beam from a light-emitting diode (LED), which is projected through a hole in a mirror which also reflects the received light back into a single-point optical system. Such systems can work well but need careful and accurate alignment between a number of optical components to be used successfully. There is also a need to ensure that this precise alignment is maintained. Such systems also need a large spinning mirror, which is expensive and will also need regular service.

US-A-4535248 discloses the use of long-wave UV excitation for detection of aflatoxin in blanched almonds.

US-A-4866283 discloses the use of laser excitation at one wavelength and detecting the level of induced luminescence at a second wavelength to identify aflatoxin in roasted peanuts. There is no suggestion to utilizing the spectral response of the induced luminescence.

US-A-8841570 discloses the use of a wideband UV light source and an RGB camera for detecting the presence of almonds and detecting aflatoxin by looking at the fluorescence level in the red channel of the RGB camera.

US-A-8563934 discloses the use of UV LEDs or fluorescent lamps as a light source and detecting peak fluorescence and peak fluorescence shift features within the emitted spectra in order to identify aflatoxin contamination. This system uses fluorescence for detecting the presence of objects, but, if there is no fluorescence, no objects are detected.

EP-A-2270475 discloses the use of a UV lamp, preferably a Wood's lamp, to provide illumination and an RGB camera to view the product, with the number of pixels considered to be contaminated being counted and referenced to a calibration curve in order to provide a measure of the aflatoxin content.

Other prior art includes CN-A-103234945, CN-A-104646315, CN-A-105044062, US-A-3305089, US-A-2010/0193412, US-A-2012/0093985 and US-A-2012/0280146.

A further problem associated with measuring the overall level of aflatoxin contamination is the nature of the fluorescence, in that some good, uncontaminated product can exhibit very low levels of fluorescence which merges with the background, meaning that this uncontaminated product goes undetected, and, if too much uncontaminated product goes undetected, the level of aflatoxin contamination is likely to be overestimated.

It is a feature of the fluorescence that some product glows the indicative color dimly and overall, while other product has one or more bright spots of the indicative color; making it difficult to make an accurate calculation of the level of aflatoxin contamination by only counting the number of aflatoxin-indicative pixels.

Satake has a fluorescence sorting apparatus which uses fluorescent lamps to create the UV light, which is used to detect bright fluorescence, such as in coffee.

As recognized by the present inventors, the use of UV fluorescent tubes illuminates product from multiple angles and so wastes a lot of the light, and is also prone to shadowing. This approach has been fine for imaging product which fluoresces brightly, but is not sufficient where the brightness of fluorescence is much less. Furthermore, multiple lights would be required in order to reduce shadowing. In addition, the detection and measurement of aflatoxin levels requires that the illumination, which is already at a low level, be split into two or more wavelengths in order to measure the particular color of the fluorescence, and so increases the amount of light needed for excitation.

It is an aim of the present invention to overcome problems associated with existing fluorescence sorting apparatus, and provide an apparatus and method which allows for efficient inspection.

In one aspect the present invention provides an inspection apparatus for inspecting a flow of product using fluorescence, the apparatus comprising: a light source which provides an elongate band of illumination to the flow of product; a camera, which has a viewing axis which intersects the flow of product, for receiving fluorescence emission along the viewing axis from objects within the flow of product; and a dichroic optic which receives the illumination from the light source and one of reflects or transmits illumination to the flow of product along the viewing axis of the camera and receives the fluorescence emission from objects within the flow of product and the other of reflects or transmits the fluorescence emission, while excluding the illumination to the camera along the viewing axis of the camera.

In one embodiment the light source comprises a plurality of light source elements, optionally the light source elements comprise light-emitting diodes (LEDs) or laser diodes (LDs), optionally the light source elements are arranged in an elongate line, optionally in adjacent relation on a printed circuit board.

In one embodiment the apparatus further comprises: an optical lens which receives the illumination from the light source and concentrates the illumination as a concentrated line of light to the dichroic optic, optionally the lens is a rod lens.

In one embodiment the illumination is in the UV, optionally the illumination has a wavelength of less than 400 nm, optionally about 365 nm, and the fluorescent emission has a wavelength greater than 400 nm, and the dichroic optic reflects light having a wavelength of less than 400 nm and transmits light at a wavelength which is greater than 400 nm.

In another embodiment the illumination is in the visible.

In a further embodiment the illumination is in the IR.

In one embodiment the dichroic optic acts as a cut filter for the illumination.

In one embodiment the dichroic optic is a dichroic mirror.

In one embodiment the camera is a hyperspectral camera.

In another embodiment the camera is a multichromatic camera adapted to image a plurality of wavelengths for detecting the spectral signature of the fluorescence emission.

In a further embodiment the camera is a bichromatic camera adapted to image two wavelengths for detecting the spectral signature of the fluorescence emission.

In one embodiment the apparatus further comprises: a processor for receiving signals from the camera and processing the signals in characterizing the product, optionally the processor is a computer analysis system or hardwired logic, optionally provided by logic gate arrays.

The present invention also extends to a sorting machine comprising the above-described inspection apparatus for inspecting a flow of product, and which sorts product.

In another aspect the present invention provides a method of inspecting a flow of product using fluorescence, the method comprising: providing an elongate band of illumination to the flow of product using a light source; providing a camera, which has a viewing axis which intersects the flow of product; and providing a dichroic optic which receives the illumination and one of reflects or transmits illumination to the flow of product along the viewing axis of the camera and receives fluorescence emission from objects within the flow of product and the other of reflects or transmits the fluorescence emission, while excluding the illumination to the camera along the viewing axis of the camera.

In one embodiment the method further comprises: concentrating the illumination as a concentrated line of light to the dichroic optic using an optical lens, optionally the lens is a rod lens.

In one embodiment the light source comprises a plurality of light source elements, optionally the light source elements comprise light-emitting diodes (LEDs) or laser diodes (LDs), optionally the light source elements are arranged in an elongate line, optionally in adjacent relation on a printed circuit board.

In one embodiment the illumination is in the UV, optionally the illumination has a wavelength of less than 400 nm, optionally about 365 nm, and the fluorescent emission has a wavelength greater than 400 nm, and the dichroic optic reflects light having a wavelength of less than 400 nm and transmits light at a wavelength which is greater than 400 nm.

In another embodiment the illumination is in the visible.

In a further embodiment the illumination is in the IR.

In one embodiment the dichroic optic acts as a cut filter for the illumination.

In one embodiment the dichroic optic is a dichroic mirror.

In one embodiment the camera is a hyperspectral camera.

In another embodiment the camera is a multichromatic camera adapted to image a plurality of wavelengths for detecting the spectral signature of the fluorescence emission.

In a further embodiment the camera is a bichromatic camera adapted to image two wavelengths for detecting the spectral signature of the fluorescence emission.

In one embodiment the method further comprises: processing signals from the camera in characterizing the product, optionally the processor is a computer analysis system or hardwired logic, optionally provided by logic gate arrays.

In one embodiment the inspection of the flow of product is for (i) mycotoxin contamination, optionally aflatoxin contamination, (ii) chlorophyll content, optionally in seeds, (iii) ochratoxin, optionally in coffee beans, or (iv) zearalenone, optionally in grains.

In one embodiment the product is a commodity, optionally seeds, grains, maize grains, peanuts, coffee beans, tree nuts or other kernels.

The present inventors have recognized that use of a dichroic element, which enables illumination and imaging to be done on the same viewing plane, greatly reduces shadowing and improves the overall image quality - removing variations in illumination due to product height above or below the viewing plane.

In one conventional apparatus, a fairly-wide area of product would need to be illuminated in order to ensure that all product is covered by the illumination, so as to allow for instability in the feed plane, which is often referred to as a diamond of illumination, whereas, in the present invention, where the illumination is on the same axis as the camera sensor, a much narrower line can be illuminated and the optical power can all be concentrated on this line, allowing effectively for a lower overall power to be used.

In addition, the dichroic element can also act as a cut filter for the UV illumination, thereby cleaning up the UV illumination. In one embodiment the apparatus can additionally include a cut filter upstream of the dichroic element.

In another conventional apparatus, a laser beam is used to provide the illumination and a spinning mirror scans the beam onto product. In this apparatus, in-line detection is done, but there are limits on the speed of the mirror and the power of a single laser, which leads to lower spatial resolution than our proposed solution.

Preferred embodiments of the present invention will now be described hereinbelow by way of example only with reference to the accompanying drawings, in which:

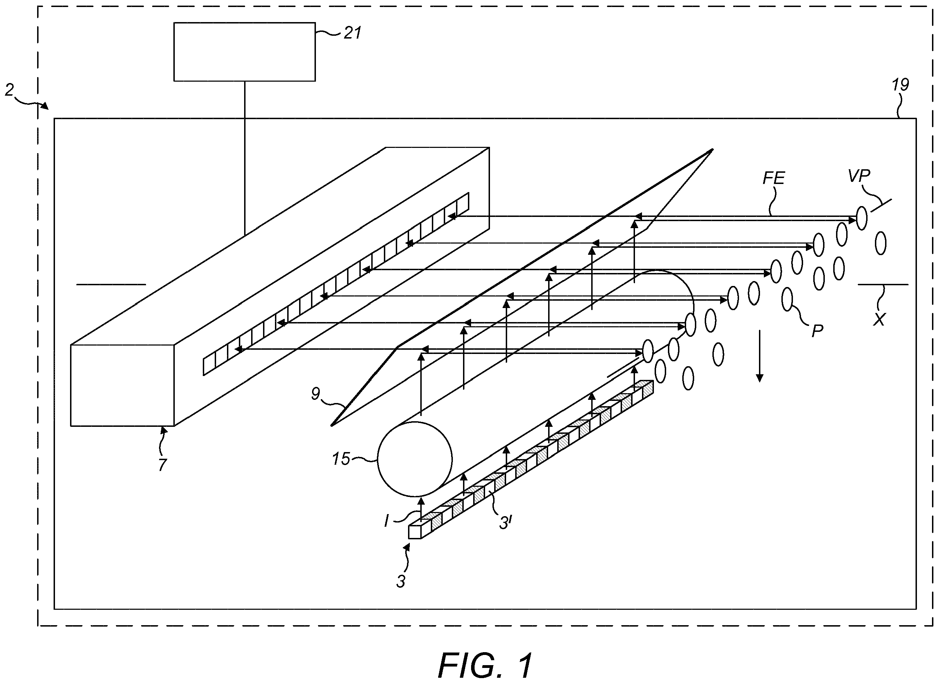

Figure 1 illustrates a sorting machine for sorting a flow of product in accordance with one embodiment of the present invention; and

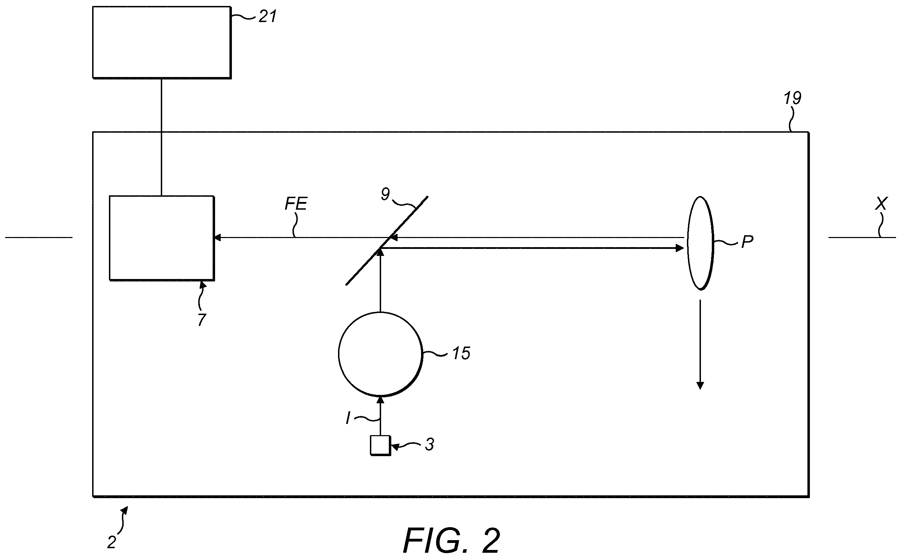

Figure 2 illustrates a vertical sectional view through the inspection apparatus of the sorting machine of Figure 1.

The sorting machine comprises an inspection apparatus 2 for inspecting a flow of product P, and which provides for characterization of product P, in this embodiment identification of product P having mycotoxin contamination, such as aflatoxin contamination.

In this embodiment the product P is maize grains, but could be other commodities, such as peanuts, coffee beans, tree nuts or other kernels.

The inspection apparatus 2 comprises a light source 3 which provides an elongate band of illumination I of a first wavelength or range of wavelengths, a camera 7, which has a viewing axis X which intersects the flow of product P, for receiving fluorescence emission FE at a second wavelength or range of wavelengths, different to the first wavelength or range of wavelengths, along the viewing axis X from objects within the flow of product P, a dichroic mirror 9 which receives the band of illumination I from the light source 3 and provides the illumination I to the flow of product P along the viewing axis X of the camera 7 and receives fluorescence emission FE from objects within the flow of product P and provides the fluorescence emission FE to the camera 7 along the viewing axis X of the camera 7, and an optical lens 15 which receives the illumination I from the light source 3 and concentrates the illumination I as a narrow, concentrated line of light to the dichroic mirror 9.

In this embodiment the light source 3 comprises a plurality of light source elements 3' which provide the band of illumination I.

In this embodiment the light source elements 3' are arranged in an elongate line, here in adjacent relation on a printed circuit board. With this arrangement, the position of the light source elements 3' is fixed and so no maintenance of the plurality of the light source 3 is required.

In this embodiment the light source elements 3' comprise light-emitting diodes (LEDs).

In another embodiment the light source elements 3' could comprise laser diodes (LDs).

With this configuration, by arranging for the illumination I to be along the viewing axis X of the camera 7, a concentrated line of light can advantageously be employed, without concern for a depth of objects within the flow of product P, as illumination of the product P is ensured, as compared to a configuration employing off-axis illumination.

In this embodiment the illumination I is in the UV. Illumination in the UV has, for example, application in relation to the detection of mycotoxin contamination, in that mycotoxin indicators fluoresce under UV illumination.

In this embodiment the illumination I has a wavelength of less than 400 nm, here about 365 nm, and the dichroic mirror 9 reflects light at a wavelength less than 400 nm and transmits light at a wavelength which is greater than 400 nm.

In an alternative embodiment the illumination I could be in the IR or visible.

For example, illumination in the visible red wavelength, here from 620 to 740 nm, has application in relation to the detection of chlorophyll, in that chlorophyll fluoresces under illumination in the visible red wavelength, with the fluorescence emission FE being in the IR.

In this embodiment the dichroic mirror 9 is configured such that the illumination I and the fluorescence emission FE are in a common viewing plane VP along the viewing axis X of the camera 7, here within ± 5 degrees of the viewing plane VP.

In this embodiment the dichroic mirror 9 also acts as a cut filter for the illumination I, thereby cleaning up the illumination I.

In this embodiment the dichroic mirror 9 acts as a highpass or lowpass filter, but not as a bandpass filter, as employed in US-A-8563934.

In this regard, it is important to recognize that the fluorescence emission FE from objects within the flow of product P is not reflected or transmitted light, but rather light caused by fluorescence of the product P engendered by excitation with the illumination I, and a significant feature of the present application of the dichroic mirror 9 is that the fluorescence emission FE, in having a wavelength or range of wavelengths which is different to that of wavelength or range of wavelengths of the illumination I, is transmitted to the camera 7, whereas the illumination I, such as could be transmitted or reflected by objects within the flow of product P, is reflected and prevented from passing to the camera 7.

In this embodiment the camera 7 is a line-scan camera.

In this embodiment the camera 7 is a multichromatic camera which is capable of viewing at least two selected wavelengths for detecting the spectral response or signature of the fluorescence emission FE.

In one embodiment the camera 7 is a bichromatic camera which is capable of viewing two selected wavelengths.

In an alternative embodiment the camera 7 could be a hyperspectral camera, which allows for detection of the spectral response or signature of the fluorescence emission FE. One such hyperspectral camera is disclosed in WO-A-2002/048687.

In this embodiment the optical lens 15 is a rod lens.

In this embodiment the inspection apparatus 2 is housed in a light box 19.

The inspection apparatus 2 further comprises a processor 21 for receiving signals from the camera 7 and processing the signals in characterizing the product P, in this embodiment for mycotoxin contamination.

In this embodiment the processor 21 characterizes the product P for mycotoxin contamination by analysis of the spectral signature of the fluorescence emission FE.

In one embodiment the characterization can be a likelihood of contamination.

In one embodiment the processor 21 is a computer analysis system, typically based on a PC.

In another embodiment the processor 21 can be performed by hardwired logic, such as logic gate arrays.

Finally, it will be understood that the present invention has been described in its preferred embodiments and can be modified in many different ways without departing from the scope of the invention as defined by the appended claims.

By way of example, although described primarily in its preferred embodiments as having application to the detection of mycotoxin contamination, and especially aflatoxin contamination, the present invention could be employed in other applications, such as to characterize chlorophyll content, for example, in seeds to determine viability, ochratoxin in coffee, or zearalenone in various cereal grains.

## Claims

1. An inspection apparatus for inspecting a flow of product (P) using fluorescence, the apparatus comprising:
a light source (3) which provides an elongate band of illumination (I) to the flow of product (P);
a camera (7), which has a viewing axis (X) which intersects the flow of product (P), for receiving fluorescence emission (FE) along the viewing axis (X) from objects within the flow of product (P); and
a dichroic optic (9) which receives the illumination (I) from the light source (3) and one of reflects or transmits illumination to the flow of product (P) along the viewing axis (X) of the camera (7) and receives the fluorescence emission (FE) from objects within the flow of product (P) and the other of reflects or transmits the fluorescence emission (FE), while excluding the illumination (I) to the camera (7) along the viewing axis (X) of the camera (7).

2. The apparatus of claim 1, wherein:
(I) the light source (3) comprises a plurality of light source elements (3'), optionally the light source elements (3') comprise light-emitting diodes (LEDs) or laser diodes (LDs), optionally the light source elements (3') are arranged in an elongate line, optionally in adjacent relation on a printed circuit board, and/or
(II) the apparatus further comprising:
an optical lens (15) which receives the illumination (I) from the light source (3) and concentrates the illumination (I) as a concentrated line of light to the dichroic optic (9), optionally the lens (15) is a rod lens.

3. The apparatus of claim 1 or 2, wherein:
(I) the illumination (I) is in the UV, optionally the illumination (I) has a wavelength of less than 400 nm, optionally about 365 nm, and the fluorescent emission (FE) has a wavelength greater than 400 nm, and the dichroic optic (9) reflects light having a wavelength of less than 400 nm and transmits light at a wavelength which is greater than 400 nm;
(II) the illumination (I) is in the visible; or
(III) the illumination (I) is in the IR.

4. The apparatus of any of claims 1 to 3, wherein:
(I) the dichroic optic (9) acts as a cut filter for the illumination (I); and/or
(II) the dichroic optic (9) is a dichroic mirror.

5. The apparatus of any of claims 1 to 4, wherein the camera (7; 107) is:
(I) a hyperspectral camera;
(II) a multichromatic camera adapted to image a plurality of wavelengths for detecting the spectral signature of the fluorescence emission (FE); or
(III) a bichromatic camera adapted to image two wavelengths for detecting the spectral signature of the fluorescence emission (FE).

6. The apparatus of any of claims 1 to 6, further comprising:
a processor (21) for receiving signals from the camera (7) and processing the signals in characterizing the product (P), optionally the processor (21) is a computer analysis system or hardwired logic, optionally provided by logic gate arrays.

7. A sorting machine comprising the inspection apparatus (2) of any of claims 1 to 6 for inspecting a flow of product (P), and which sorts product (P).

8. A method of inspecting a flow of product (P) using fluorescence, the method comprising:
providing an elongate band of illumination (I) to the flow of product (P) using a light source (3);
providing a camera (7), which has a viewing axis (X) which intersects the flow of product (P); and
providing a dichroic optic (9) which receives the illumination (I) and one of reflects or transmits illumination to the flow of product (P) along the viewing axis (X) of the camera (7) and receives fluorescence emission (FE) from objects within the flow of product (P) and the other of reflects or transmits the fluorescence emission (FE), while excluding the illumination (I) to the camera (7) along the viewing axis (X) of the camera (7).

9. The method of claim 8, further comprising:
concentrating the illumination (I) as a concentrated line of light to the dichroic optic (9) using an optical lens (15), optionally the lens (15) is a rod lens.

10. The method of claim 8 or 9, wherein the light source (3) comprises a plurality of light source elements (3'), optionally the light source elements (3') comprise light-emitting diodes (LEDs) or laser diodes (LDs), optionally the light source elements (3') are arranged in an elongate line, optionally in adjacent relation on a printed circuit board.

11. The method of any of claims 8 to 10, wherein:
(I) the illumination (I) is in the UV, optionally the illumination (I) has a wavelength of less than 400 nm, optionally about 365 nm, and the fluorescent emission (FE) has a wavelength greater than 400 nm, and the dichroic optic (9) reflects light having a wavelength of less than 400 nm and transmits light at a wavelength which is greater than 400 nm;
(II) the illumination (I) is in the visible; or
(III) the illumination (I) is in the IR.

12. The method of any of claims 8 to 11, wherein:
(I) the dichroic optic (9) acts as a cut filter for the illumination (I); and/or
(II) the dichroic optic (9) is a dichroic mirror.

13. The method of any of claims 8 to 12, wherein the camera (7) is:
(I) a hyperspectral camera;
(II) a multichromatic camera adapted to image a plurality of wavelengths for detecting the spectral signature of the fluorescence emission (FE); or
(III) a bichromatic camera adapted to image two wavelengths for detecting the spectral signature of the fluorescence emission (FE).

14. The method of any of claims 8 to 13, further comprising:
processing signals from the camera (7) in characterizing the product (P), optionally the processor (21) is a computer analysis system or hardwired logic, optionally provided by logic gate arrays.

15. The apparatus, sorting machine or method of any of claims 1 to 14, wherein:
(I) the inspection of the flow of product (P) is for (i) mycotoxin contamination, optionally aflatoxin contamination, (ii) chlorophyll content, optionally in seeds, (iii) ochratoxin, optionally in coffee beans, or (iv) zearalenone, optionally in grains; and/or
(II) the product is a commodity, optionally seeds, grains, maize grains, peanuts, coffee beans, tree nuts or other kernels.
